**Europäisches Patentamt**

**European Patent Office**

**Office européen des brevets**

(19)

(11) Publication number : **0 498 524 A2**

## (12) EUROPEAN PATENT APPLICATION

(21) Application number : **92300070.7**

(22) Date of filing : **06.01.92**

(51) Int. Cl.$^5$ : **G01S 13/93, H01Q 15/02**

(30) Priority : **06.02.91 GB 9102585**

(43) Date of publication of application :
**12.08.92 Bulletin 92/33**

(84) Designated Contracting States :
**BE DE ES FR IT NL SE**

(71) Applicant : **GEC-Marconi Limited
The Grove Warren Lane
Stanmore Middlesex HA7 4LY (GB)**

(72) Inventor : **Kumar, Balbir
70A Eton Avenue
Sudbury, Wembley, Middlesex HA0 3AU (GB)**

(74) Representative : **Pope, Michael Bertram
Wingate
The General Electric Company, p.l.c., GEC
Patent Dept.(Wembley Office), Hirst Research
Centre, East Lane
Wembley Middlesex HA9 7PP (GB)**

(54) **Detection system.**

(57)    A detection system detects objects in the path of a vehicle on which it is mounted by transmitting a beam of radiation broad in comparison with the beam width of the receiving antenna (7A, 7B, 7C, 9, 11) and detecting radiation reflected back from the objects to the receiving antenna.

The receiving antenna comprises a plurality of discrete antenna elements (7A, 7B, 7C), each of which receives radiation from a given range of directions of the obstacle relative to the vehicle.

The present invention relates to detection systems and in particular to detection systems suitable for use on road vehicles for collision avoidance purposes.

Conventional vehicle-mounted systems employ an antenna to transmit a narrow beam of radiation in the direction of motion of the vehicle and use the same antenna to detect radiation reflected from objects in the path of the transmitted beam.

A disadvantage of such a system is that it can only detect objects in the path of the vehicle whereas it is frequently desirable to have an indication of the presence of objects on either side of the vehicle path.

To provide such an indication it has been proposed to mount the detection system on the vehicle so that it can be mechanically scanned through an appropriate horizontal angle thereby to detect objects anywhere within the area scanned by the transmitted beam. However such mechanical scanning systems tend to be somewhat expensive.

It is an object of the present invention to provide a detection system which overcomes this problem.

According to the present invention there is provided a detection system suitable for use on a road vehicle for collision avoidance purposes comprising means for transmitting a beam of radiation and a receiving antenna for detecting radiation reflected back from objects in the path of said beam; characterised in that said transmitted beam is relatively broad compared with the beam width of the receiving antenna and the receiving antenna is arranged so that its direction of look can be varied.

In one particular embodiment of the invention the receiving antenna comprises a plurality of discrete antenna elements and a lens means arranged to focus radiation reflected from objects in different directions onto different ones of said antenna elements.

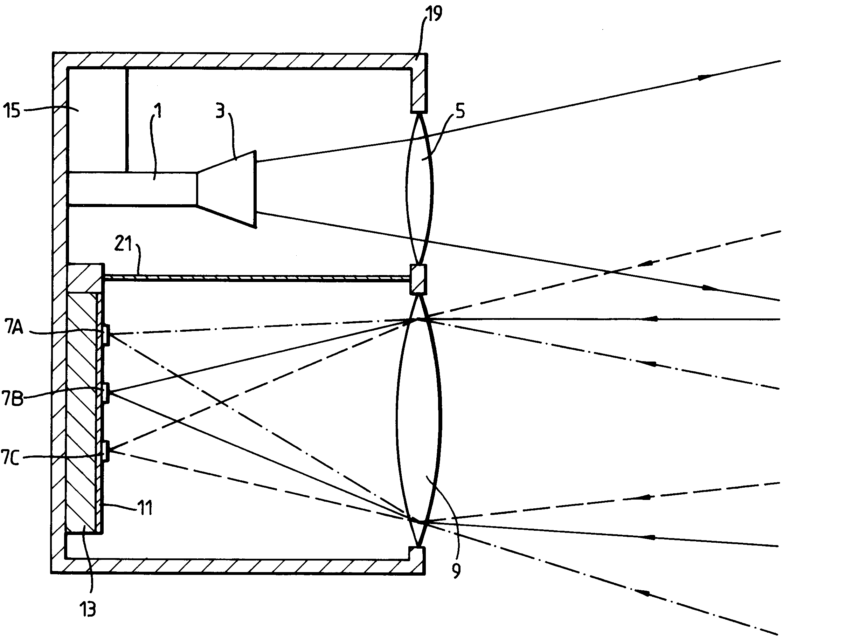

One detection system in accordance with the embodiment of the invention will now be described by way of example with reference to the accompanying drawing which is a diagram illustrating the system.

In this system, the transmitted signals are radio frequency signals having a frequency of around 77 GHz to take advantage of the reduced atmospheric attenuation at this frequency, and comprise a succession of identical pulses in each of which the frequency increases linearly with time. By comparing the frequency of the reflected signals with the frequency of the transmitted signals at the time the reflected signals are received, the distance of an obstacle from the vehicle may be determined. Additionally the velocity of the obstacle relative to the vehicle can be determined from the Doppler shift in frequency.

Referring to the drawings, the system includes a transmitting antenna consisting of a waveguide 1 and a horn 3, together with a dielectric lens 5 which produces a beam whose angular spread is about 10°.

Typically the beam is of circular cross-section but it may instead be of elliptical cross-section with the major axis of cross-section horizontal. The transmitted radiation is generated by a Gunn oscillator 15 mounted alongside the waveguide 1.

The beam produced by the transmitting antenna 1, 3 is transmitted in the direction of motion of the vehicle but, due to its relatively broad width, is reflected, not only by objects directly in front of the vehicle but also by objects on either side of the vehicle, provided they are sufficiently far in front of the vehicle.

The system further includes a receiving antenna including a dielectric lens 9 and three separate antenna elements 7A, 7B, 7C positioned in horizontally spaced relationship about 3mm apart. Typically each of the antenna elements 7A, 7B, 7C is a square patch antenna, with dimensions of around half the transmitted signal wavelength. The antenna elements 7A, 7B and 7C and the lens 9 are relatively positioned so that radiation reflected from objects directly ahead of the vehicle is focussed by the lens 9 onto the central receiving antenna element 7B whilst radiation reflected from objects to the left and right of the vehicle is focussed by lens 9 onto antenna elements 7C and 7A respectively. The antenna elements 7A, 7B, 7C and the lens 9 are arranged such that the angular spread of the received reflected radiation for each antenna element 7A, 7B or 7C is about 3° with an overlap of 0.5° between adjacent angular spreads.

The signals produced at antenna elements 7A, 7B, 7C are fed to a switching circuit formed on a quartz substrate 11 on which the antenna elements 7A, 7B, 7C are carried. It will be appreciated, in this connection, that the transmitted signal wavelength from which the dimensions of the patch antennas 7A, 7B, 7C are calculated is the wavelength of the signal when confined to substrate 11.

The switching circuit switches continuously from one antenna element to another at 500Hz, using reflection switches to avoid signal loss at these high frequencies. Further processing of the signals to detect the range, speed and direction of objects takes place in an integrated circuit (not shown), also formed on the substrate 11, a metal plate 13 acting as a ground plane for the circuit.

The transmitting and receiving antennas are suitably housed in a casing 19 adapted to be mounted at the front of a vehicle. The dielectric lenses 5, 9 form a hermetic seal with the casing 19 and may be produced as parts thereof. The transmitting antenna 1, 3 is separated from the receiving antenna 7A, 7B, 7C, 9 by a partition 21.

In a modification of the radar system described by way of example the receiving antenna is arranged so that its direction of look can be varied vertically instead of or in addition to horizontally, e.g. by providing discrete antenna elements above and below the central element 7B.

Whilst in the system described by way of example each antenna element 7A, 7B or 7C comprises a single conductive element, in other systems each antenna element may comprise more than one conductive element e.g. four in a static split arrangement.

It will be appreciated that whilst in the system according to the invention described by way of example, separate transmitting and receiving antennas are used, that is not necessarily the case in a system according to the invention. Hence in a modification of the system, the same antenna is used for transmitting the radio frequency signals, as well as for receiving reflected signals as discussed above.

It will be understood that in a system according to the invention antennas having a variable direction of look of a different form to that described above by way of example may be used. Suitable alternative forms of steerable receiving antenna include multi-element phased array antennas and frequency-scan array antennas.

Although in the described example, the system uses radio frequency radiation, it will be appreciated that by substituting appropriate transmitting and receiving means, radiation of other frequencies e.g. optical frequencies can be used.

## Claims

1. A detection system suitable for use on a road vehicle for collision avoidance purposes comprising means (1, 3) for transmitting a beam of radiation and a receiving antenna (7A, 7B, 7C, 9) for detecting radiation reflected back from objects in the path of said beam; characterised in that said transmitted beam is relatively broad compared with the beam width of the receiving antenna (7A, 7B, 7C, 9, 11) and the receiving antenna (7A, 7B, 7C, 9, 11) is arranged so that its direction of look can be varied.

2. A system as claimed in Claim 1 in which said receiving antenna (7A, 7B, 7C, 9, 11) includes a plurality of discrete antenna (7A, 7B, 7C) elements and lens means (9) arranged to focus radiation reflected from objects in different directions onto different ones of said antenna elements (7A, 7B, 7C) and switching means for switching from one antenna element (7A, 7B, 7C) to another.

3. A system as claimed in Claim 2 in which said receiving antenna (7A, 7B, 7C, 9, 11) includes three discrete antenna elements (7A, 7B, 7C).

4. A system as claimed in Claim 2 or 3 wherein said discrete antenna elements (7A, 7B, 7C) are patch antennas.

5. A system as claimed in Claims 2, 3 or 4 wherein said antenna elements (7A, 7B, 7C) are positioned in a horizontally spaced relationship.

6. A system as claimed in Claim 1 in which the receiving antenna comprises a multi-element phased array antenna.

7. A system as claimed in Claim 1 in which the receiving antenna comprises a frequency scan array antenna.